# DEMANDE DE BREVET EUROPEEN

(11) **EP 0 927 578 A1**
(43) Date de publication de la demande: **07.07.1999**
(21) Numéro de dépôt: 98403309.2
(22) Date de dépôt: 28.12.1998
(51) Int. Cl.: B01L 5/04, G01N 1/34

(54) **Procédé et appareil pour le prélèvement des éléments gazeux et particulaires d'un milieu gazeux en vue de leur analyse**

(30) Priorité: 30.12.1997 FR 9716671
(71) Demandeur: Laboratoire D'Etudes et de Controles, 92140 Clamart (FR)
(72) Inventeur: Kouyate, Djakaridia, 92140 Clamart (FR); Rosier, Pierre, 75015 Paris (FR); Quiseffit, Jean-Paul, 75014 Paris (FR); Bitomi, Makola, 92170 Vanves (FR)
(74) Mandataire: Vialle-Presles, Marie José

(57) **Abrégé**

L'Invention se rapporte à un procédé et à un appareil pour prélever les éléments gazeux et particulaires présents dans un milieu gazeux pour leur analyse, lequel appareil comprend : une enceinte (2) ; des moyens (5, 26) pour introduire le milieu gazeux dans l'enceinte et pour l'évacuer hors de l'enceinte ; des moyens (27) pour permettre au milieu gazeux de traverser l'enceinte de bas en haut en un flux continu ; un élément (13) pour subdiviser ce flux en filets ; des moyens pour introduire dans l'enceinte (2), au-dessus dudit élément (13), une fraction d'un volume de liquide destiné à interagir avec le milieu gazeux et pour renouveler en continu cette fraction ; un réservoir (3) muni de moyens de scellement pour recueillir le volume de liquide après qu'il ait interagi avec le milieu gazeux et des moyens pour mesurer le volume de milieu gazeux ayant interagi avec le liquide.

## Description

La présente Invention se rapporte à un procédé et à un appareil pour le prélèvement des éléments gazeux et particulaires (solides ou liquides) tels que les gaz de combustion, les composés organiques volatils, les hydrocarbures aromatiques polycycliques, les métaux, les polluants radioactifs, les contaminants biologiques, ..., susceptibles de se trouver dans un milieu gazeux, en vue de l'analyse qualitative et quantitative de ces éléments.

Pour l'analyse des contaminants des milieux gazeux et, notamment, pour la recherche et le dosage des polluants atmosphériques, on a proposé de nombreux appareils qui peuvent être classés schématiquement en deux catégories :
- une première catégorie comprenant les appareils qui assurent de manière simultanée une détection et une identification, voire une mesure de la concentration des polluants recherchés et qui utilisent, pour ce faire, des méthodes d'analyse fondées sur les propriétés physiques de ces polluants (indice de réfraction conductivité thermique, infrarouge, ...), et
- une deuxième catégorie comprenant les appareils qui visent à collecter les polluants à partir du milieu gazeux dans lequel ils se trouvent, en vue de leur identification et de leur dosage ultérieurs dans un laboratoire. Les appareils entrant dans cette deuxième catégorie sont très nombreux. On a ainsi proposé :
   - des appareils qui réalisent la collecte des polluants par filtration d'un flux du milieu gazeux à analyser sur un filtre solide de type filtre métallique, filtre à charbon actif ou filtre en mousse de polyuréthanne ;
   - des dispositifs qui recueillent les polluants dans un liquide par déviation d'un flux du milieu gazeux à analyser dans ce liquide et séparation des polluants dudit milieu gazeux par inertie ;
   - des appareils du type de celui proposé dans le Brevet Américain n° 4,208,912, qui visent à faire traverser, au milieu gazeux, une enceinte préremplie d'un volume de liquide et terminée à ses deux extrémités par une membrane perméable aux gaz mais imperméable aux liquides, de manière à ce que s'opère, au cours de cette traversée, un transfert des polluants du gaz vers le liquide ; et
   - des appareils dénommés "impingers" dans la littérature Anglo-saxonne tels que celui décrit dans le Brevet Américain n° 5,154,891, et dont le principe est de projeter le milieu gazeux à analyser sur une surface se trouvant au sein d'une masse de liquide pour provoquer une collision entre le milieu gazeux et le liquide en vue, là également, d'obtenir un transfert des polluants dudit milieu gazeux vers le liquide.

Les appareils de la première catégorie offrent le bénéfice de disposer d'une analyse instantanée, ce qui les rend particulièrement adaptés à une utilisation en tant que systèmes d'alerte, par exemple dans le cadre d'une surveillance continue de la qualité de l'atmosphère. Ils présentent toutefois l'inconvénient majeur de n'être étalonnés que pour une seule famille de polluants ou même, dans certains cas, pour un seul polluant et de n'assurer, de ce fait, que la détection et l'identification de cette seule famille ou de ce seul polluant. De plus, ces appareils ne permettent pas de détecter les particules biologiques telles que les pollens ou les micro-organismes de type bactéries, virus ou champignons.

Les appareils de la deuxième catégorie, s'ils présentent l'avantage de permettre une analyse plus complète d'un milieu gazeux, ne donnent toutefois pas totalement satisfaction.

En effet, dans le cas des collecteurs qui utilisent une filtration sur filtre solide, la collecte des polluants est nécessairement limitée aux éléments dont la taille est supérieure au diamètre des pores du filtre, en sorte que les éléments de taille moindre échappent à l'analyse. Il en est de même avec les collecteurs qui utilisent un effet d'inertie et qui ne permettent pas, en pratique, de séparer les éléments de petite taille du milieu gazeux.

Les appareils du type de celui décrit dans le Brevet Américain n° 4,208,912, ne permettent pas, eux, d'assurer le prélèvement des particules liquides et solides susceptibles d'être présentes dans le milieu gazeux puisque ce dernier est amené à traverser, lors de son entrée dans l'enceinte, une membrane qui n'est perméable qu'aux gaz. Au surplus, même en ce qui concerne les particules gazeuses, l'interaction entre le gaz et le liquide qui se produit dans ces appareils est trop insuffisante pour garantir la validité du prélèvement de ces particules.

Les collecteurs qui utilisent une filtration sur filtre solide présentent de plus l'inconvénient d'altérer les micro-organismes, de par le choc que ces derniers subissent lorsque, entraînés par le flux gazeux, ils heurtent le filtre. Ceci est également vrai en ce qui concerne les "impingers", compte tenu de la force avec laquelle le milieu gazeux est projeté sur la surface destinée à provoquer sa collision avec le liquide. Or, la détection et l'identification des micro-organismes présents dans un gaz nécessitent de les cultiver, une fois séparés de ce gaz, sur des milieux appropriés de manière à ce qu'ils donnent naissance à des colonies, ce qui n'est bien entendu pas possible lorsqu'ils ont été altérés ou détruits.

La Demanderesse s'est donc fixée pour but de fournir un procédé et un appareil pour le prélèvement des éléments gazeux et particulaires présents dans un milieu gazeux en vue de leur analyse qualitative et quantitative, qui, d'une manière générale, ne présentent pas les inconvénients des procédés et appareils de l'art antérieur.

Plus particulièrement, la Demanderesse s'est fixée pour but de fournir un procédé qui permette de collecter tous les éléments se trouvant dans ce milieu sous forme gazeuse ou particulaire et ce, quelle que soit leur nature (organique, minérale ou biologique) et leur taille, qui préserve de plus l'intégrité des micro-organismes vivants ainsi collectés, de manière à garantir la validité de ce prélèvement et, partant, la fiabilité des résultats de l'analyse devant être effectuée ultérieurement, tout en offrant la possibilité de réaliser aussi bien un prélèvement sélectif c'est-à-dire ciblé sur une ou plusieurs familles d'éléments, voire sur un seul élément d'une telle famille, qu'un prélèvement non sélectif propre à permettre une analyse exhaustive des éléments gazeux et particulaires contenus dans un même milieu.

La Demanderesse s'est également fixée pour but de fournir un procédé de prélèvement des éléments gazeux et particulaires susceptibles d'être présents dans un milieu gazeux qui, tout en présentant les avantages ci-dessus mentionnés, garantisse l'absence de toute contamination des éléments prélevés qui serait de nature à fausser les résultats de l'analyse, permette de réaliser un prélèvement en un temps relativement court et puisse être aisément mis en oeuvre sur tout type de sites (milieux extérieurs ou milieux confinés) grâce à un matériel transportable et autonome.

La Demanderesse s'est, en outre, fixée pour but de fournir un appareil permettant de mettre en oeuvre un tel procédé, qui présente des dimensions et un poids le rendant facilement transportable et manipulable, qui soit capable de fonctionner quel que soit le lieu où l'on souhaite effectuer le prélèvement, qui soit facile à utiliser y compris par une personne qui n'est pas une spécialiste de ce type de prélèvement, qui puisse être facilement nettoyé entre deux prélèvements pour éviter qu'un prélèvement ne contamine le suivant et dont le coût de fabrication soit compatible avec les impératifs industriels.

Il a été proposé, dans le Brevet Français n° 78 17439, un appareil visant à résoudre le problème du lavage d'un gaz en vue de le dépoussiérer, de le déshumidifier ou encore d'en neutraliser les composants corrosifs. Cet appareil permet de réaliser une interaction entre le gaz à laver et un liquide de lavage, en maintenant, dans une chambre mise en dépression et traversée de bas en haut par le gaz à laver, le liquide de lavage en suspension au-dessus d'un élément séparateur perméable grâce aux bulles qui se forment à la surface de cet élément du fait du passage du gaz au travers dudit élément. De par sa destination, cet appareil est conçu pour traiter de grands volumes de gaz et son fonctionnement met en oeuvre des quantités de liquide de lavage relativement importantes, qui sont utilisées de manière fractionnée pour éviter une saturation de ce liquide en poussières et particules et qui sont éliminées après usage.

Or, la Demanderesse a découvert que, pour résoudre un problème tout à fait différent, à savoir celui de l'analyse des éléments gazeux et particulaires présents dans un milieu gazeux, cette technologie proposée pour le lavage industriel des gaz pouvait, de manière surprenante, être adaptée au prélèvement des éléments contaminants contenus dans un échantillon gazeux et être avantageusement optimisée de manière à garantir la validité de ce prélèvement et, partant, la fiabilité de l'analyse desdits éléments devant être réalisée ultérieurement.

La présente Invention a donc pour objet un procédé pour prélever les éléments gazeux et/ou particulaires présents dans un milieu gazeux en vue de l'analyse qualitative et quantitative de ces éléments, ledit procédé utilisant une interaction entre ledit milieu gazeux et un volume prédéterminé d'un liquide et étant caractérisé en ce qu'il comprend :
a) l'introduction, dans une enceinte traversée de bas en haut par le milieu gazeux en un flux gazeux continu et comprenant un élément subdivisant ce flux gazeux en une pluralité de filets gazeux, d'une fraction du volume de liquide au-dessus de cet élément,
b) le maintien en suspension de cette fraction au-dessus dudit élément, grâce aux bulles formées par lesdits filets gazeux au contact du liquide, pendant un temps convenablement choisi, ladite fraction étant maintenue constante tout en étant renouvelée par un apport continu d'une quantité de liquide équivalente à celle qui s'écoule de la suspension par gravité,
c) le recueil du volume de liquide ayant interagi avec le milieu gazeux dans un réservoir muni de moyens de scellement pour sa fermeture hermétique, et
d) la mesure du volume de milieu gazeux ayant interagi avec le volume de liquide.

Au sens de la présente Invention, on entend par milieu gazeux tout gaz ou mélange de gaz, éventuellement sous forme de vapeur ou de dispersion de type aérosol telle qu'une brume ou un brouillard.

Selon une première disposition avantageuse de l'Invention, la subdivision du flux gazeux en filets gazeux est réalisée au moyen d'un élément traversé sur sensiblement toute sa surface par des ouvertures de taille fixe et régulièrement réparties.

En effet, bien que cela ne soit nullement obligatoire et qu'il soit possible d'assurer la subdivision du flux gazeux avec un élément muni d'ouvertures de taille variable et irrégulièrement distribuées, on préfère utiliser, selon l'Invention, un élément dont les ouvertures ont toutes la même taille et sont régulièrement réparties sur sensiblement toute sa surface, de manière à obtenir une distribution homogène des filets gazeux au sein du liquide maintenu en suspension au-dessus dudit élément et à favoriser, ainsi, la captation par ce liquide des éléments gazeux et particulaires présents dans ledit milieu.

Par ailleurs, dans la mesure où la taille et le nombre des ouvertures de cet élément conditionnent la taille et le nombre des filets gazeux et, partant, celles des bulles formées par ces filets gazeux au contact du liquide maintenu en suspension, on préfère également utiliser, selon l'Invention, un élément qui présente des ouvertures de petite taille, avantageusement de diamètre compris entre environ 0,1 et 2 mm, et en nombre élevé, avantageusement compris entre environ 2 000 et 25 000, et de préférence entre environ 2 000 et 8 000, par m² de surface dudit élément, afin d'obtenir une surface élevée d'interaction entre le milieu gazeux et ledit liquide propre à faciliter également l'enrichissement de ce liquide en éléments gazeux et particulaires contenus dans ce milieu.

Selon une autre disposition avantageuse de l'Invention, le liquide destiné à interagir avec le milieu gazeux comprend une ou plusieurs substances capables de favoriser la captation par ce liquide des éléments gazeux et particulaires à prélever.

Ces substances, qui peuvent être peuvent être choisies parmi de très nombreux solvants et composés chimiques, doivent toutefois présenter les caractéristiques suivantes :
• avoir vis-à-vis des éléments que l'on souhaite prélever une affinité suffisante pour être en mesure de retenir ces éléments par solubilisation, absorption ou tout autre processus ; ainsi, par exemple, pour la captation des hydrocarbures aromatiques polycycliques (coronène, naphtalène, fluorène, anthracène, pyrène, ...) et des composés organiques volatils (benzène, éthylbenzène, toluène, chloroforme, chlorométhane, ...), on utilisera avantageusement un mélange de solvants de polarités différentes, capable de solubiliser l'ensemble de ces composés, des plus polaires jusqu'aux plus apolaires, tel qu'un mélange d'acétonitrile et d'un alcool lourd de type éthylène glycol, diacétate d'éthylène glycol ou glycérol ; pour la captation des composés carbonylés (formaldéhyde, acétaldéhyde, benzaldéhyde, crotonaldéhyde, acétone, cyclohexanone, ...), on utilisera avantageusement une substance présentant une polarité proche de celle ces composés telle que la 2,4-dinitrophénylhydrazine, tandis que la captation des métaux lourds (arsenic, plomb, mercure, ...), pourra être, elle, avantageusement réalisée avec de l'eau acidifiée ou alcalinisée et éventuellement additionnée par un ou plusieurs oxydants tels que le borohydrure de sodium.
• être miscibles entre elles pour ne former qu'une seule phase liquide homogène; et
• être exemptes de toute contamination par les éléments à prélever pour éviter de fausser le prélèvement et, partant, les résultats de l'analyse ultérieure.

Par ailleurs, dans le cas où l'on souhaite que l'analyse des éléments présents dans le milieu gazeux tienne compte des micro-organismes (bactéries, virus, champignons, ...) contenus dans ce milieu, il est nécessaire que ces substances soient atoxiques vis-à-vis de ces micro-organismes ou, à tout le moins, soient présentes dans le liquide en quantités suffisamment faibles pour les rendre atoxiques, de manière à ce que lesdits micro-organismes puissent survivre dans le liquide jusqu'au moment où ils seront mis en culture.

Selon une autre disposition avantageuse de l'Invention, le liquide destiné à interagir avec le milieu gazeux comprend, de plus, au moins un agent tensioactif dont la fonction est de permettre, par une diminution de la tension superficielle de ce liquide, la formation à son contact de microbulles par les filets gazeux et d'augmenter encore la surface d'interaction entre le milieu gazeux objet du prélèvement et le liquide et, par voie de conséquence, la captation par celui-ci des éléments gazeux et particulaires présents dans ledit milieu.

Cet agent tensioactif peut être choisi parmi tous les composés habituellement utilisés en tant qu'agents tensioactifs anioniques et cationiques. Toutefois, conformément à l'Invention, on utilise, de préférence, un mélange comprenant des quantités sensiblement équivalentes d'un agent tensioactif anionique tel que le dodécylsulfate de sodium (SDS) et d'un agent tensioactif cationique comme le chlorure de cétyltriméthylammonium (CTAC) , la Demanderesse ayant en effet constaté que, d'une manière générale, l'utilisation exclusive d'un agent tensioactif anionique présente l'inconvénient de conduire à la formation de mousses nuisant au bon déroulement du procédé de prélèvement, et que l'addition d'un agent tensioactif cationique permet d'équilibrer la tension superficielle du liquide destiné à interagir avec le milieu gazeux et conduit à la formation de microbulles et non, de mousses exclusivement.

A titre d'exemple, l'utilisation d'un liquide comprenant la composition qualitative et quantitative suivante :

| | |
|---|---|
| · agent tensioactif anionique (SDS) | 10⁻⁶ à 10⁻⁷ % (p/v) |
| · agent tensioactif cationique (CTAC) | 10⁻⁶ à 10⁻⁷ % (p/v) |
| · 2,4-dinitrophénylhydrazine | 10⁻² à 10⁻³ % (p/v) |
| · acétonitrile | 0,5 à 5 % (v/v) |
| · diéthylène glycol | 0,1 à 5 % (v/v) |
| · HCl à 37% (m/v) | 0,01 à 1 % (v/v) |
| · Eau purifiée | q.s.p. 100 % |

s'est révélée être particulièrement bien adaptée au prélèvement des hydrocarbures aromatiques polycycliques, des composés organiques volatils, des composés carbonylés, des métaux lourds ainsi que des contaminants biologiques de type pollens et micro-organismes, présents dans un milieu gazeux.

Selon encore une autre disposition avantageuse de l'Invention, le flux gazeux est soumis, préalablement à sa subdivision en filets gazeux et à son interaction avec le liquide, à un écoulement tourbillonnaire de type cyclonique pour la séparation et le recueil des particules les plus denses contenues dans ce flux gazeux. Cet écoulement, qui est avantageusement appliqué au milieu gazeux après son admission dans l'enceinte, permet notamment d'éviter que les particules les plus denses du flux gazeux ne soient entraînées par celui-ci au contact de l'élément subdivisant le flux gazeux en filets gazeux et ne viennent obstruer cet élément.

Conformément à l'Invention, le liquide qui est maintenu en suspension au-dessus de l'élément subdivisant le flux gazeux en filets gazeux correspond à une fraction du volume total du liquide destiné à interagir avec le milieu gazeux et cette fraction est maintenue constante tout en étant renouvelée par un apport continu d'une quantité de liquide équivalente à celle s'écoulant de la suspension par gravité. Cette disposition permet, en effet, d'amener tout le volume de liquide devant interagir avec le milieu gazeux à être plusieurs fois en contact avec ce milieu et, partant, de favoriser la captation par ce liquide des éléments gazeux et particulaires contenus dans ledit milieu.

Selon encore une autre disposition avantageuse de l'Invention, l'apport continu d'une quantité de liquide équivalente à celle qui s'écoule de la suspension par gravité est réalisé par une distribution de ce liquide au-dessus de la fraction maintenue en suspension grâce à un système de distribution alimenté en liquide à partir d'un réservoir dans lequel s'effectue le recueil du liquide s'écoulant de la suspension par gravité.

Selon une modalité préférée de cette disposition, la distribution du liquide au-dessus du volume de liquide maintenu en suspension est réalisée sous la forme d'un voile de liquide recouvrant sensiblement toute la surface libre de la fraction maintenue en suspension, et dont la fonction est d'assurer une captation des éléments gazeux et/ou particulaires qui pourraient ne pas avoir été captés par ladite fraction.

Selon encore une autre disposition avantageuse de l'Invention, le volume de liquide destiné à interagir avec le milieu gazeux est contenu dans un réservoir hermétiquement clos et muni de moyens d'ouverture pour permettre l'introduction de ce liquide dans l'enceinte.

Selon une disposition préférée de l'Invention, le réservoir qui contient le volume de liquide destiné à interagir avec le milieu gazeux est le même réservoir que celui dans lequel ce volume de liquide est recueilli après avoir interagi avec ledit milieu gazeux.

De telles dispositions permettent, en effet, d'éviter toute contamination de ce liquide que ce soit, avant ou après l'opération de prélèvement, par des éléments gazeux et particulaires autres que ceux prélevés.

Conformément à l'Invention, le procédé comprend une opération de mesure du volume de milieu gazeux ayant interagi avec le volume de liquide. En effet, les éléments présents dans le volume de liquide, à l'issue de l'interaction entre le milieu gazeux et ce liquide, étant destinés à être soumis à une analyse quantitative visant à établir leur concentration dans le milieu gazeux d'où ils ont été prélevés, il convient de mesurer de manière précise le volume de milieu gazeux sur lequel a été effectué le prélèvement, soit en fixant à l'avance le volume de milieu gazeux devant interagir avec le liquide, soit en déterminant, au terme de l'opération de prélèvement, le volume de milieu gazeux ayant interagi avec ledit liquide.

Le procédé pour prélever les éléments gazeux et particulaires présents dans un milieu gazeux conforme à l'Invention présente de nombreux avantages. En effet, en assurant des conditions optimales d'interaction entre le milieu gazeux et le liquide, il permet de réaliser des prélèvements de haute fiabilité, sélectifs ou non-sélectifs, sans altération des micro-organismes prélevés, tout en utilisant un faible volume de liquide, compris avantageusement entre 100 et 500 ml et propre à permettre l'obtention de concentrations en éléments prélevés suffisamment élevées pour rendre possible l'analyse de ces éléments par les méthodes d'analyse classiquement utilisées en laboratoire, sans qu'il soit nécessaire de procéder préalablement à une concentration du liquide ayant interagi avec ledit milieu gazeux. Ce faible volume de liquide présente, de plus, l'avantage de pouvoir être aisément transporté jusqu'au site de prélèvement, puis de celui-ci jusqu'au laboratoire devant effectuer l'analyse des éléments prélevés. Ce procédé permet également d'effectuer ces prélèvements en un temps relativement court, avantageusement compris entre 30 minutes et 2 heures selon les éléments recherchés.

Il présente, de ce fait, un grand intérêt et de nombreuses applications dans le contrôle et la surveillance de la pollution de l'air atmosphérique ainsi que de la qualité d'ambiances, tant au niveau industriel (contrôle et surveillance de l'état sanitaire des locaux et des chaînes de production, contrôle des émissions liées à cette production, ...), que dans les exploitations agricoles, les collectivités telles que les hôpitaux et les établissements scolaires, et les immeubles de bureaux ou d'habitation.

L'Invention a également pour objet un appareil pour prélever les éléments gazeux et/ou particulaires présents dans un milieu gazeux en vue de l'analyse qualitative et quantitative de ces éléments par une interaction entre ledit milieu gazeux et un volume prédéterminé d'un liquide, caractérisé en ce qu'il comprend :
- une enceinte,
- des moyens pour introduire le milieu gazeux dans l'enceinte et des moyens pour évacuer ce milieu hors de l'enceinte,
- des moyens pour mettre en dépression l'intérieur de l'enceinte de manière à permettre au milieu gazeux de traverser cette enceinte de bas en haut en un flux gazeux continu,
- un élément pour subdiviser ce flux gazeux en une pluralité de filets gazeux au cours de sa traversée de l'enceinte,
- des moyens pour introduire dans l'enceinte, au-dessus de l'élément subdivisant le flux gazeux en filets gazeux, une fraction du volume de liquide destiné à interagir avec le milieu gazeux,
- des moyens pour renouveler en continu cette fraction,
- un réservoir pour recueillir le volume de liquide après qu'il ait interagi avec le milieu gazeux, le dit réservoir étant muni de moyens de scellement pour sa fermeture hermétique, et
- des moyens pour mesurer le volume de milieu gazeux ayant interagi avec le volume de liquide.

Selon une première disposition avantageuse de l'Invention, l'enceinte comprend une chambre d'interaction dans laquelle s'effectue l'interaction entre le milieu gazeux et le volume de liquide et qui comprend, à sa partie inférieure, l'élément subdivisant le milieu gazeux en filets gazeux, lequel s'étend sur sensiblement toute la section transversale de cette chambre.

Selon une autre disposition avantageuse de l'Invention, l'élément pour subdiviser le flux gazeux en filets gazeux est un élément traversé sur sensiblement toute sa surface par des ouvertures de taille fixe et régulièrement réparties.

Cet élément qui est de, préférence, un élément rigide et de faible épaisseur tel qu'une grille en matière plastique ou une membrane constituée par un matériau à cellules ouvertes de type mousse de matière plastique, présente avantageusement des ouvertures de diamètre compris entre 0,1 et 2 mm et qui sont au nombre d'environ 2 000 à 25 000, et de préférence d'environ 2 000 à 8 000, par m² de surface de cet élément.

Selon encore une autre disposition avantageuse de l'Invention, l'enceinte comprend au-dessous de la chambre d'interaction une chambre de type "cyclone" assurant un écoulement tourbillonnaire du milieu gazeux avant son entrée dans ladite chambre d'interaction.

Selon encore une autre disposition avantageuse de l'Invention, les moyens pour introduire la fraction du volume de liquide destiné à interagir avec le milieu gazeux et les moyens pour renouveler cette fraction en continu comprennent un système assurant la distribution de ce liquide à la partie supérieure de la chambre d'interaction, sous la forme d'un voile s'étendant sur sensiblement toute la section transversale de cette chambre, et des moyens pour alimenter ce système à partir d'un réservoir contenant initialement ledit volume de liquide et dans lequel s'effectue le recueil du liquide s'écoulant de la suspension par gravité.

Selon une modalité préférée de cette disposition, le système assurant la distribution du liquide à la partie supérieure de la chambre d'interaction comprend une conduite qui pénètre dans cette chambre, et dont une extrémité se confond avec l'axe vertical de ladite chambre et est surmontée à faible distance d'un élément déflecteur tandis que son autre extrémité est reliée au moyen assurant son alimentation en liquide. Ces derniers comprennent, par exemple, une première canalisation reliant cette conduite à une pompe, laquelle elle-même reliée par l'intermédiaire d'une seconde canalisation au réservoir contenant le liquide.

Selon encore une autre disposition avantageuse de l'Invention, le réservoir contenant initialement le volume de liquide destiné à interagir avec le milieu gazeux est le même réservoir que celui dans lequel ce volume de liquide est recueilli après avoir interagi avec le milieu gazeux.

Selon une modalité préférée de cette disposition, le réservoir contenant le liquide destiné à interagir avec le milieu gazeux et servant de moyens de recueil de ce liquide est un élément indépendant de l'enceinte et apte à être connecté de manière réversible à cette enceinte et aux moyens d'alimentation du système assurant la distribution du liquide dans la chambre d'interaction.

De préférence, ce réservoir est une cartouche hermétiquement close, préremplie du volume de liquide destiné à interagir avec le milieu gazeux et comprenant des moyens de connexion avec l'enceinte d'une part, et avec lesdits moyens d'alimentation d'autre part, lesdits moyens de connexion étant munis de moyens pour leur ouverture et leur fermeture, du type clapet anti-retour coulissant, clapet anti-retour à bille ou analogue.

De manière particulièrement avantageuse, l'appareil comprend, de plus, des moyens de raccordement à un réseau électrique et des moyens d'alimentation en énergie électrique pour son fonctionnement en autonomie.

Comme précédemment indiqué, l'appareil comprend des moyens pour mesurer le volume de milieu gazeux ayant interagi avec le volume de liquide. Conformément à l'Invention, ces moyens permettent soit de fixer, avant d'effectuer une opération de prélèvement, le volume de milieu gazeux devant interagir avec le liquide, soit de déterminer, au terme d'une opération de prélèvement, le volume de milieu gazeux ayant interagi avec le liquide.

De manière préférée, l'appareil se présente sous la forme d'une structure compacte, portable ou tractable par une personne, du type sac à dos, valise ou mallette, propre à permettre son transport et sa manipulation sur tout site de prélèvement.

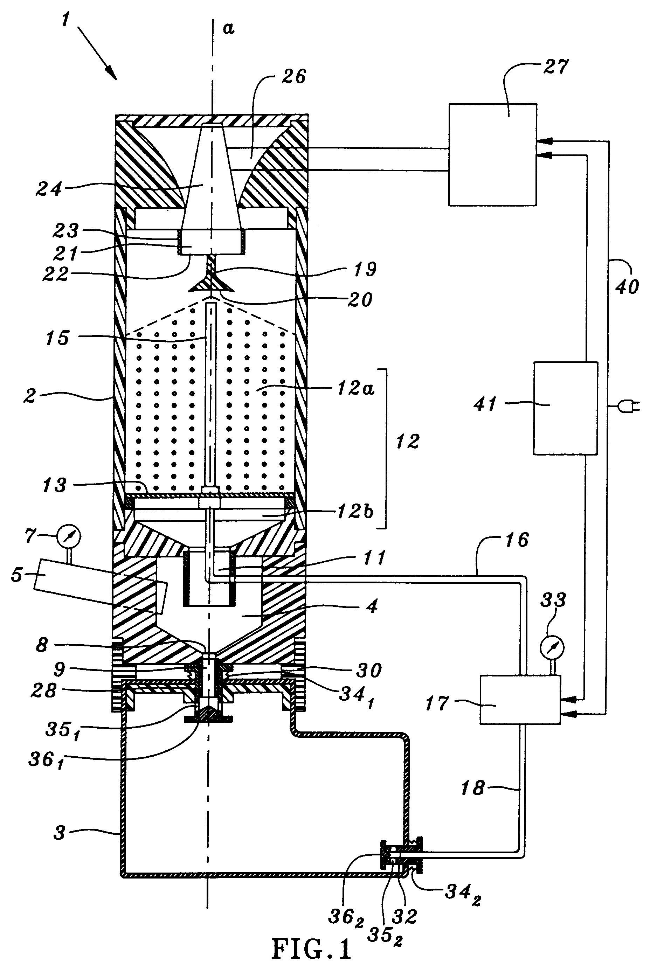

L'Invention sera mieux comprise à l'aide du complément de description qui suit, fait à titre d'exemple et en référence à la Figure 1 annexée qui représente une vue en coupe verticale schématique d'un mode de réalisation d'un appareil permettant d'utiliser une interaction entre un gaz et un liquide pour le prélèvement des éléments gazeux et particulaires susceptibles d'être présents dans un milieu gazeux, en vue de l'analyse qualitative et quantitative de ces éléments, en condition de fonctionnement.

Il va de soi, toutefois, que ce complément de description n'est donné qu'à titre d'illustration de l'objet de l'Invention et ne constitue en aucune manière une limitation de cet objet.

On se réfère tout d'abord à la Figure 1.

L'appareil (1) représenté sur cette Figure comporte, en premier lieu, une enceinte (2) et un réservoir (3) qui, en condition de fonctionnement de cet appareil, est fixé à la partie inférieure de cette enceinte et qui est destiné à contenir, avant l'opération de prélèvement, le liquide devant interagir avec le milieu gazeux dont on souhaite prélever les éléments gazeux et particulaires - lesquels seront dénommés respectivement "liquide de captation" et "milieu à analyser" dans ce qui suit -, à recueillir ce liquide pendant et au terme de cette opération de prélèvement et de recueil et, éventuellement, à le stocker le temps nécessaire jusqu'à la réalisation de l'analyse.

L'enceinte (2), qui est à section droite circulaire et de grand axe a vertical, comprend de bas en haut :
- une chambre d'admission (4) du milieu à analyser au niveau de laquelle ledit milieu pénètre dans l'enceinte (2),
- une chambre d'interaction (12) dans laquelle s'effectue l'interaction entre le milieu à analyser et le liquide de captation, et
- une chambre de déshumidification et d'évacuation (24) du milieu à analyser au niveau de laquelle le milieu à analyser ayant interagi avec le liquide de captation est asséché, puis évacué hors de l'enceinte (2).

Ces chambres sont elles-mêmes à section droite circulaire et leur grand axe se confond avec celui de l'enceinte (2).

La chambre d'admission (4) du milieu à analyser est une chambre de type "cyclone", dont le diamètre interne est réduit par rapport au diamètre interne de la chambre d'interaction (12) située au-dessus d'elle et qui est reliée à l'extérieur de l'enceinte (2) par une buse d'amenée (5) du milieu à analyser, qui traverse la paroi latérale de cette enceinte (2) selon un axe non nul par rapport à la normale à ladite paroi, de manière à ce que le milieu à analyser pénètre dans ladite chambre d'admission (4) tangentiellement à cette normale. Cette chambre comprend, par ailleurs, une goulotte (11) à section droite circulaire et de même axe vertical qu'elle, qui s'étend sur une partie de sa hauteur et la relie à la chambre d'interaction (12) sus-jacente.

La buse d'amenée (5) est munie d'un débitmètre (7) pour la mesure, le réglage et le contrôle du débit de ce milieu lors de son admission dans l'enceinte (2). Elle peut, de plus, être avantageusement pourvue, au niveau de son extrémité extérieure à l'enceinte (2), d'un système de raccordement (non représenté sur la Figure 1) propre à permettre sa connexion avec un dispositif de stockage ou de transport d'un gaz de type réservoir, bouteille ou autre, pour le cas où le milieu gazeux dont on veut prélever les éléments gazeux et particulaires, est contenu dans un tel dispositif.

La chambre d'admission (4) présente, à sa partie inférieure, une forme tronconique et comporte un orifice (8) qui se prolonge par une tubulure (9). Cette tubulure, qui est à section droite circulaire et dont l'axe vertical se confond avec celui de la chambre d'admission (4), traverse la paroi inférieure de l'enceinte (2) et fait saillie sur la surface externe de cette paroi. Comme visible sur la Figure 1, elle est emboîtée dans un manchon (28) de forme et de dimensions conjuguées aux siennes et qui est situé à l'extrémité supérieure du réservoir (3) du liquide de captation sous-jacent, de manière à assurer une liaison étanche entre la chambre d'admission (4) et l'intérieur de ce réservoir.

Comme également visible sur la Figure 1, la chambre d'interaction (12), qui s'étend au-dessus de la chambre d'admission (4) à partir de l'extrémité supérieure de la goulotte (11), est divisée transversalement en deux parties, une partie supérieure (12a) ou chambre d'interaction proprement dite et une partie inférieure (12b) ou chambre de répartition du milieu à analyser, par une grille (13) à mailles fixes et régulièrement distribuées, qui s'étend radialement sur toute la section transversale de cette chambre d'interaction et qui est destinée à subdiviser le flux du milieu à analyser provenant de la chambre d'admission (4) en une pluralité de filets gazeux avant son entrée dans la chambre d'interaction proprement dite (12a).

La chambre de répartition (12b) a pour fonction de permettre au flux du milieu à analyser issu de la chambre d'admission (4) de se répartir, au sortir de la goulotte (11), sur une section transversale sensiblement de même taille que la section transversale de la chambre d'interaction proprement dite (12a) de manière à ce que l'interaction entre le flux du milieu à analyser et le liquide de captation puisse se produire sur toute la section transversale de ladite chambre d'interaction proprement dite (12a). La chambre de répartition (12b) a également pour fonction de guider le liquide de captation s'écoulant par gravité, en condition de fonctionnement de l'appareil (1), de la chambre d'interaction proprement dite (12a) vers la chambre d'admission (4), d'où ce liquide s'écoulera ensuite vers le réservoir (3) du liquide de captation.

De ce fait, la chambre de répartition (12b) a la forme d'un entonnoir évasé vers le haut, dont l'extrémité inférieure présente un diamètre interne identique au diamètre interne de la goulotte (11) à laquelle elle est reliée, et dont l'extrémité supérieure présente un diamètre interne légèrement réduit par rapport au diamètre interne de la chambre d'interaction proprement dite (12a), de manière à ce que la surface interne de la paroi latérale de l'enceinte (2) forme, à ce niveau et sur toute sa périphérie, un rebord (14) propre à servir de support à la grille (13).

Par ailleurs, la chambre d'interaction (12) est traversée verticalement par une conduite (15) tubulaire et de même axe vertical qu'elle, qui prend naissance à l'intérieur de la goulotte (11) de la chambre d'admission (4), traverse la grille (13) en son centre et s'étend sur environ les 3/4 de la hauteur de ladite chambre d'interaction (12). Cette conduite est connectée à son extrémité inférieure à une canalisation (16) tubulaire et radiale, qui traverse la goulotte (11), la chambre d'admission (4), puis la paroi latérale de l'enceinte (2), et rejoint une pompe (17) située à l'extérieur de ladite enceinte (2) et elle-même reliée, par l'intermédiaire d'une autre canalisation (18) tubulaire, au réservoir (3) du liquide de captation.

La conduite (15) est destinée à distribuer, en condition de fonctionnement de l'appareil (1), le liquide de captation dans la chambre d'interaction proprement dite (12a) provenant, via les canalisations (16) et (18) et la pompe (17), du réservoir (3) et son extrémité supérieure est surmontée à faible distance par un élément déflecteur (19) dont le rôle est de permettre une distribution du liquide de captation sous la forme d'un voile de liquide s'étendant sur sensiblement toute la section transversale de la chambre d'interaction proprement dite (12a).

Comme représenté sur la Figure 1, l'élément déflecteur (19) se présente sous la forme d'un tronc de cône plein, dont l'axe vertical se confond avec celui de la conduite (15), dont la grande base est située en regard de l'extrémité supérieure de cette conduite et est constituée par une calotte (20) légèrement concave vers le bas, s'étendant radialement sur environ le 1/4 de la section transversale de la chambre d'interaction (12), et présentant un rayon de courbure d'environ 15 mm, tandis que sa petite base est solidarisée à l'extrémité inférieure d'une grille de coalescence (21) reliant la chambre d'interaction (12) à la chambre de déshumidification et d'évacuation (24) du milieu à analyser qui se trouve au-dessus d'elle.

Cette grille de coalescence, qui a pour fonction de retenir, dans la chambre d'interaction proprement dite (12a), les plus grosses des particules de liquide de captation qui sont entraînées par le flux du milieu à analyser vers la partie supérieure de l'enceinte (2) et d'éviter ainsi que ces particules ne pénètrent dans la chambre de déshumidification et d'évacuation (24), se présente sous la forme d'un cylindre creux, de section droite circulaire et de même axe vertical que celui de la chambre d'interaction (12). Ce cylindre est fermé à son extrémité inférieure par un disque (22) portant l'élément déflecteur (19). Sa paroi latérale (23) est formée d'un treillis serré constituant la seule voie de passage du flux du milieu gazeux, tandis que son extrémité supérieure est fixée à l'extrémité inférieure de la chambre de déshumidification et d'évacuation (24).

La chambre de déshumidification et d'évacuation (24) se présente, quant à elle, sous la forme d'une cheminée tronconique dont l'extrémité inférieure présente un diamètre interne identique à celui de la grille de coalescence (21) et dont l'extrémité supérieure, de diamètre interne plus réduit, est solidarisée à la paroi supérieure de l'enceinte (2), de manière à ce que le flux du milieu à analyser soit soumis, dans cette chambre, à un écoulement tourbillonnaire propre à retenir les particules de liquide de captation susceptibles d'avoir traversé la grille de coalescence (21) et à assurer, ainsi, l'assèchement de ce flux avant son évacuation hors de l'enceinte (2).

L'évacuation du flux du milieu à analyser est assurée par une buse de sortie (26) qui relie la partie supérieure de la chambre de déshumidification et d'évacuation (24) à un ventilateur aspirant (27) situé hors de l'enceinte (2) et dont la fonction est de créer une dépression à l'intérieur de cette enceinte, de manière à obtenir un écoulement du milieu à analyser, depuis la buse d'amenée (5) jusqu'à ladite buse de sortie (26), selon un flux continu, régulier et suffisant pour obtenir des conditions propres à permettre le maintien en suspension, en condition de fonctionnement de l'appareil (1), du liquide de captation dans la chambre d'interaction proprement dite (12a).

Ce ventilateur aspirant (27) est avantageusement muni d'un système (non représenté sur la Figure 1) permettant de commander, de régler et de contrôler son fonctionnement et ce, en vue d'obtenir une dépression la plus stable possible tout au long d'un prélèvement.

Ainsi que mentionné ci-avant, l'appareil (1) comprend, outre l'enceinte (2), un réservoir (3) qui, en condition de fonctionnement de cet appareil, est fixé à la partie inférieure de ladite enceinte (2).

La fixation du réservoir (3) à la partie inférieure de l'enceinte (2) est assurée par l'emboîtement de la tubulure (9) de l'enceinte (2) dans le manchon (28) que comporte ce réservoir à sa partie supérieure, emboîtement qui assure également une liaison étanche entre la chambre d'admission (4) et l'intérieur dudit réservoir (3).

Par ailleurs, comme visible sur la Figure (1) l'appareil (1) comprend un élément de support (30) dont la fonction est de maintenir, conjointement avec cet emboîtement, l'enceinte (2) en position sur le réservoir (3). Cet élément de support se présente sous la forme d'un anneau de diamètre externe identique à celui de l'enceinte (2). Il comporte, au niveau de la partie médiane de sa surface interne et sur toute la périphérie de cette surface, un rebord qui délimite vers le haut, un premier logement dans lequel est logée, par emboîtement, l'extrémité inférieure de l'enceinte (2) qui présente, sur toute la périphérie de la surface externe un évidement de forme et de dimensions conjuguées à celles de ce premier logement, et vers le bas, un second logement dans lequel est logée, également par emboîtement, la partie supérieure du réservoir (3) dont la forme et les dimensions sont conjuguées à celles de ce second logement.

Le réservoir (3) comporte, par ailleurs, avantageusement à sa partie inférieure, un embout (32) de formes et de dimensions conjuguées à celles de la canalisation (18) et propre à recevoir par emboîtement l'extrémité de cette canalisation pour son raccordement à la pompe (17).

Cette dernière, qui a pour fonction d'assurer l'alimentation en liquide de captation de la chambre d'interaction proprement dite (12a), par l'intermédiaire de la canalisation (16) et la conduite (15), est avantageusement une pompe péristaltique en raison de ce que ce type de pompe ne génère pas, en conditionnement de fonctionnement, d'émission de particules susceptible de fausser la validité du prélèvement, contrairement aux pompes de type centrifuge, à piston ou encore à palettes. Elle est munie d'un débitmètre (33) pour la mesure, le réglage et le contrôle du débit de distribution du liquide de captation dans la chambre d'interaction proprement dite (12a) ainsi que d'un système (non représenté sur la Figure 1) permettant de commander et de contrôler son fonctionnement.

L'appareil (1) peut être conçu de manière à ce que l'enceinte (2) et le réservoir (3) du liquide de captation soient fixés l'un à l'autre de manière permanente. Dans ce cas, il convient de munir le réservoir (3), avantageusement à sa partie supérieure, d'un moyen d'ouverture et de fermeture propre à permettre, préalablement à la réalisation d'un prélèvement, l'introduction dans ce réservoir d'un volume déterminé de liquide de captation, le recueil de ce liquide au terme de ce prélèvement pouvant, lui, s'effectuer au moyen de l'embout (32).

Toutefois, conformément à l'Invention, le réservoir (3) du liquide de captation est, de préférence, un élément indépendant de l'enceinte (2) et apte à être fixé à cette enceinte de manière réversible.

Dans ce dernier cas qui correspond au mode de réalisation de l'appareil (1) représenté sur la Figure 1, le réservoir (3) se présente avantageusement sous la forme d'une cartouche hermétiquement close, préremplie d'un volume prédéterminé de liquide de captation et dont le manchon (28) d'une part, et l'embout (32) d'autre part, sont pourvus de moyens permettant leur ouverture respective lors de la fixation du réservoir (3) sous l'enceinte (2) et de sa connexion avec la canalisation (18), et leur fermeture lors de la désolidarisation du réservoir (3) d'avec ces éléments.

Ainsi, comme visible sur la Figure 1, le manchon (28) et l'embout (32) du réservoir (3) se présentent chacun sous la forme d'un coulisseau qui est monté sur des ressorts (34₁, 34₂), dont la base est percée latéralement d'orifices (35₁, 35₂) et est munie d'un clapet (36₁, 36₂), lequel en position de repos, c'est-à-dire de fermeture du manchon et de l'embout, isole le liquide de captation de l'extérieur de la cartouche. L'emboîtement de la tubulure (9) de l'enceinte (2) dans ce manchon d'une part, et l'emboîtement de l'extrémité de la canalisation (18) dans cet embout d'autre part, provoquent le glissement de ces coulisseaux vers l'intérieur du réservoir (3) et la libération de leurs orifices latéraux, assurant ainsi la circulation du liquide de captation, tandis que le retrait de ladite tubulure (9) et de ladite canalisation (18) entraîne le glissement inverse des coulisseaux et le retour des clapets (36₁, 36₂) à leur position initiale.

L'utilisation d'une telle cartouche présente l'avantage d'éviter que le liquide de captation ne soit contaminé, préalablement ou postérieurement à l'opération de prélèvement, par des éléments gazeux ou particulaires autres que ceux recueillis par ce liquide au cours de cette opération, lesquels fausseraient la validité du prélèvement, tout en facilitant le transport, une fois l'opération de prélèvement terminée, du liquide de captation du site du prélèvement jusqu'au laboratoire chargé d'effectuer l'analyse des éléments gazeux et particulaires présents dans ce liquide.

L'appareil (1) comprend, outre l'enceinte (2), le réservoir (3) du liquide de captation, le ventilateur aspirant (27), la pompe (17), les canalisations (16) et (18), des moyens d'alimentation en énergie électrique propres à permettre son fonctionnement quel que soit le lieu où l'on souhaite effectuer l'opération de prélèvement. De ce fait, ces moyens comprennent d'une part, des moyens (40) pour raccorder cet appareil sur un réseau électrique tel qu'un câble de connexion, lorsqu'un tel réseau existe sur le site de prélèvement, et, d'autre part, des moyens d'alimentation (41) le rendant apte à fonctionner en autonomie de type batteries, accumulateurs rechargeables ou analogues, pour les autres cas.

L'appareil (1) comprend, de plus, des moyens permettant de fixer, préalablement à la réalisation d'un prélèvement, le volume de milieu gazeux devant réagir avec le liquide de captation, par exemple par une programmation de la durée de fonctionnement de l'aspirateur aspirant, ou de déterminer, au terme d'une opération de prélèvement, le volume de milieu gazeux ayant interagi avec ce liquide, en vue de permettre l'analyse quantitative de ces éléments. Dans ce dernier cas, ces moyens peuvent utiliser le débitmètre (7) dont est pourvue la buse d'amenée (5) et comprendre, par exemple, une horloge affichant la durée de l'opération de prélèvement ou un dispositif effectuant le calcul du volume de gaz ayant pénétré dans l'enceinte (2), en fonction de la durée de l'opération de prélèvement et du débit d'admission du milieu gazeux dans cette enceinte, et affichant le résultat de ce calcul.

Comme visible sur la Figure 1, l'enceinte (2) est adaptée à sa réalisation sous la forme d'une structure démontable permettant d'effectuer, entre deux opérations de prélèvement, un nettoyage des éléments qui la compose, de manière à garantir l'absence de toute contamination d'un prélèvement par le prélèvement précédent, et dans laquelle :
- la chambre de déshumidification et d'évacuation (24) forme avec la grille de coalescence (21) et l'élément déflecteur (19) un premier sous-ensemble amovible,
- la chambre d'interaction proprement dite (12a) forme un deuxième sous-ensemble amovible,
- la chambre de répartition (12b) forme avec la goulotte (11) un troisième sous-ensemble amovible, tandis que
- la chambre d'admission (4) et la tubulure (9) forment un quatrième sous-ensemble amovible,
la grille (13), la conduite (15) et la canalisation (16) constituant elles-mêmes des éléments aptes à être désolidarisés les uns des autres ainsi que des chambres qu'ils traversent.

Conformément à l'Invention, l'enceinte (2) (ou les éléments résultant de son démontage) et les autres constituants de l'appareil (1), à savoir le réservoir (3), la pompe (17), les canalisations (16) et (18), le ventilateur aspirant (27), les débitmètres (7) et (33), les moyens (40) et (41) d'alimentation en énergie électrique et les éventuels systèmes de commande et de contrôle du ventilateur aspirant et de la pompe, sont avantageusement réunis sous la forme d'une structure compacte, portable ou tractable par une personne, telle qu'un sac à dos, une valise ou une mallette munie par exemple de poignées, d'une bandoulière ou de roulettes, et comprenant des logements propres à recevoir chacun de ces constituants, pour permettre le transport de cet appareil sur tout site de prélèvement sans risque de détérioration. Cette structure peut, en outre, être conçue pour servir de support commun à tout ou partie des constituants de l'appareil (1) en condition de fonctionnement.

Les différents constituants de l'appareil (1) peuvent être réalisés dans de nombreux matériaux plastiques ou métalliques, sous réserve que ces matériaux soient d'une part, capables de résister aux éventuels effets corrosifs des substances pouvant être présentes dans le liquide de captation, lorsqu'ils concernent des parties de cet appareil appelées à être au contact de ce liquide et, d'autre part, capables de résister aux contraintes mécaniques auxquelles ledit appareil est susceptible d'être soumis, lorsqu'ils concernent des parties de l'appareil (1) jouant un rôle de support. De plus, il est avantageux que ces matériaux présentent une masse volumique raisonnable pour que l'appareil (1) puisse présenter un poids le rendant facilement transportable et manipulable.

Ainsi, par exemple, les parties de l'appareil (1) destinées à être au contact du liquide de captation pourront être réalisées en polytétrafluoroéthylène en raison de sa résistance aux agressions chimiques. Au niveau de la chambre d'interaction proprement dite (12a), la paroi latérale de l'enceinte (2) pourra avantageusement être réalisée en Plexiglas qui présente, de plus, l'avantage d'être transparent, ce qui permettra à l'utilisateur de surveiller le bon déroulement de l'interaction en condition de fonctionnement de l'appareil (1), tandis que les parties de l'appareil (1) destinées à jouer un rôle de support pourront être constituées par du polypropylène ou un alliage à base d'aluminium.

Le prélèvement des éléments gazeux et particulaires présents dans un milieu gazeux au moyen de l'appareil (1) représenté sur la Figure 1 s'effectue de la manière suivante : on met tout d'abord en marche le ventilateur aspirant (27), ce qui a pour effet d'entraîner une dépression à l'intérieur de l'enceinte (2) et, partant, une aspiration du milieu à analyser - que l'on admettra être ici l'air ambiant - de l'extérieur de l'enceinte (2) vers l'intérieur de celle-ci. Le milieu à analyser pénètre donc dans la chambre d'admission (4), par l'intermédiaire de la buse d'amenée (5), en un flux gazeux continu et régulier et selon un débit convenablement choisi que l'on règle au moyen du débitmètre (7).

De par la structure de type "cyclone" de la chambre d'admission (4), ce flux gazeux est soumis, au sein de cette chambre, à un mouvement tourbillonnaire, puis il s'écoule, via la goulotte (11), dans la chambre d'interaction (12) qu'il traverse de bas en haut et au sein de laquelle il est subdivisé en une pluralité de filets gazeux lors de son passage au travers de la grille (13).

Il traverse ensuite le treillis formant la paroi latérale de la grille de coalescence (21), pénètre dans la chambre de déshumidification et d'évacuation (24) au niveau de laquelle il est de nouveau soumis à un mouvement tourbillonnaire avant de quitter l'enceinte (2) par la buse de sortie (26).

Lorsque l'écoulement du milieu gazeux au travers de l'enceinte (2) est établi et stabilisé, on met en marche la pompe (17) de manière à introduire dans la chambre d'interaction proprement dite (12a), par l'intermédiaire des canalisations (16) et (18) et de la conduite (15) et selon un débit également convenablement choisi et que l'on règle grâce au débitmètre (33), une fraction du volume du liquide de captation contenu dans le réservoir (3).

Cette fraction, une fois présente dans la chambre d'interaction proprement dite (12a), se place immédiatement en suspension au-dessus de la grille (13) et s'y maintient de par le fait que les filets gazeux nés de la subdivision du flux gazeux lors du passage de ce dernier au travers de cette grille génèrent au sein de ce liquide une multitude de bulles qui s'élèvent de manière continue et régulière au-dessus de ladite grille (13). Un équilibre est atteint lorsque la colonne de liquide de captation en suspension au-dessus de cette grille exerce sur celle-ci une pression égale à la dépression induite par le ventilateur aspirant (27), équilibre qui se traduit par une interaction homogène entre le liquide de captation et le flux du milieu à analyser sur toute la hauteur et la section de cette colonne et permet, ainsi, un transfert des éléments gazeux et particulaires contenus dans ce flux vers le liquide de captation.

L'introduction d'une quantité supplémentaire de liquide de captation dans la chambre d'interaction proprement dite (12a) entraîne une augmentation de la pression exercée par la colonne de liquide en suspension qui est immédiatement compensée par l'écoulement, par gravité, d'une quantité équivalente de liquide de captation de la suspension vers la chambre de répartition (12b), puis de celle-ci vers la chambre d'admission (4), et enfin de cette dernière vers le réservoir (3). Cette quantité de liquide est ensuite réintroduite, de par le fonctionnement de la pompe (17), dans la chambre d'interaction proprement dite (12a). Il s'établit ainsi une circulation continue du liquide de captation entre le réservoir (3) et la chambre d'interaction proprement dite (12a) qui permet d'amener tout le volume du liquide de captation initialement présent dans ce réservoir à interagir plusieurs fois avec le milieu à analyser.

Au cours de son écoulement dans la chambre d'admission (4), le liquide de captation entraîne avec lui les particules les plus denses contenues dans le flux du milieu à analyser lors de son entrée dans l'enceinte (2) et qui se séparent de ce flux sous l'effet de l'écoulement tourbillonnaire auquel il est soumis à l'intérieur de cette chambre d'admission et qui sont ainsi recueillies par le liquide de captation.

De par la présence de l'élément déflecteur (19), la distribution du liquide de captation dans la chambre d'interaction proprement dite (12a) s'effectue sous la forme d'un voile de liquide qui recouvre sensiblement toute la surface libre de la fraction du volume de liquide en suspension dans ladite chambre. Ce voile de liquide permet d'assurer une ultime captation des éléments gazeux et particulaires du flux gazeux, avant que ce flux gazeux ne quitte la chambre d'interaction proprement dite (12a) et ne pénètre dans la chambre de déshumidification et d'évacuation (24).

Par ailleurs, lorsque le flux gazeux se dirige vers la chambre de déshumidification et d'évacuation (24), il entraîne avec lui des particules de liquide de captation. Les plus grosses de ces particules sont retenues dans la chambre d'interaction proprement dite (12a) par le treillis formant la paroi latérale de la grille de coalescence (21) au moment où le flux gazeux traverse ce treillis, tandis que les particules les plus fines sont retenues dans la chambre de déshumidification et d'évacuation (24) sous l'effet de l'écoulement tourbillonnaire auquel est soumis ce flux gazeux dans cette chambre. Ces particules s'écoulent alors vers la chambre d'interaction proprement dite (12a) au niveau de laquelle elles rejoignent la fraction du volume de liquide en suspension.

Le flux gazeux quitte, quant à lui, la chambre de déshumidification et d'évacuation (24), épuré et asséché.

Pour mettre fin au prélèvement, il suffit d'arrêter le ventilateur aspirant (27), ce qui a immédiatement pour effet de provoquer l'écoulement de la fraction du volume de liquide se trouvant en suspension au-dessus de la grille (13), vers la partie inférieure de l'enceinte (2) et le réservoir (3), ainsi que la pompe (17) de manière à stopper la circulation continue du liquide de captation.

Comme mentionné ci-avant, l'obtention d'une interaction satisfaisante entre le milieu à analyser et le liquide de captation nécessite que le débit d'admission du milieu gazeux dans l'enceinte (2) et le débit de distribution du liquide de captation dans la chambre d'interaction proprement dite (12a) soient convenablement choisis.

Le débit d'admission du milieu gazeux dans l'enceinte (2) est choisi en fonction de la durée de l'opération de prélèvement qui peut avantageusement être prévue pour être comprise entre 30 minutes et 2 heures et ce, de manière à ce que le volume de milieu gazeux sur lequel est effectué le prélèvement soit, de préférence, compris entre 5 et 30 m³ selon la teneur présumée en éléments gazeux et/ou particulaires de ce milieu. Il va de soi qu'il convient que la grille (13) assurant la subdivision du flux du milieu gazeux en filets gazeux lors de son écoulement dans la chambre d'interaction (12) soit adaptée, tant au niveau du nombre de ses ouvertures que de leur taille, à être traversée par un flux gazeux présentant un tel débit.

Le débit de distribution du liquide de captation dans la chambre d'interaction proprement dite (12a) est, quant à lui, choisi en fonction du débit d'admission du milieu gazeux dans l'enceinte (2) et de la viscosité du liquide de captation et sera d'autant plus élevé que ce débit d'admission et cette viscosité seront élevés.

L'intérêt du procédé et de l'appareil conformes à l'Invention a été vérifié au moyen d'une série de tests consistant chacun à soumettre l'atmosphère d'un lieu déterminé à des opérations de prélèvement ciblées chacune sur une famille de composés (hydrocarbures aromatiques polycycliques, composés organiques volatils, composés carbonylés et métaux lourds), à effectuer l'analyse qualitative et quantitative de ces composés à partir des prélèvements ainsi réalisés et à comparer les concentrations obtenues aux taux moyens établis pour ces mêmes composés et pour la même atmosphère par un Organisme de référence.

Les tests présentés ci-dessous ont été effectués sur l'air atmosphérique du centre ville de PARIS en utilisant pour les prélèvements :
- un appareil (1) comprenant une chambre d'interaction proprement dite (12a) de 8 cm de diamètre interne et de 22 cm de hauteur, et une grille (13) munie d'ouvertures de 1 mm de diamètre et réparties à raison de 2 500 ouvertures /m² de surface de grille,
- un débit d'admission du milieu gazeux dans l'enceinte (2) de 14 m³/heure,
- un volume de liquide de captation de 300 ml,
- un débit de distribution du liquide de captation dans la chambre d'interaction proprement dite (12a) égal à 1 000 ml/minute,
- une durée de prélèvement de 2 heures, et
- des liquides de captation comprenant, outre un agent tensioactif anionique et un agent tensioactif cationique :
   - pour le prélèvement des hydrocarbures aromatiques polycycliques (HAP) : de l'eau, de l'acétonitrile et du diacétate d'éthylène glycol ou du glycérol,
   - pour le prélèvement des composés organiques volatils (COV) : de l'eau, de l'acétonitrile, du diacétate d'éthylène glycol ou du glycérol, de la cyclohexyl-2-pyrrolidone et du carbonate d'éthylène,
   - pour le prélèvement des composés carbonylés (aldéhydes, cétones) : de l'eau, de l'acétonitrile, du diacétate d'éthylène glycol ou du glycérol et de la 2,4-dinitrophénylhydrazine,
   - pour le prélèvement des métaux lourds : de l'eau acide ou basique et du borohydrure de sodium.

L'analyse qualitative et quantitative des composés prélevés a été, elle, réalisée :
- par chromatographie liquide haute performance (HPLC) et chromatographie en phase gazeuse couplée (CPG) à une spectroscopie de masse pour les hydrocarbures aromatiques polycycliques,
- par CPG munie d'un détecteur par ionisation de flamme pour les composés organiques volatils,
- par HPLC pour les composés carbonylés, et
- par fluorescence X, spectroscopie d'absorption atomique et spectroscopie d'absorption par plasma pour les métaux lourds.

Le Tableau 1 ci-dessous présente les concentrations obtenues par l'analyse des prélèvements réalisés conformément à l'Invention (et qui sont dénommées "concentrations calculées" dans ce Tableau) pour deux composés de chacune des familles de composés prélevés, ainsi que les taux moyens établis pour ces mêmes composés et pour l'air atmosphérique de la ville de PARIS (et qui sont dénommés "taux moyens" dans le Tableau 1) par le Laboratoire de la PREFECTURE de POLICE de PARIS (Rapport Annuel, 1995) par l'analyse de prélèvement effectués au moyen des méthodes de prélèvement conventionnellement utilisées pour ces familles de composés.

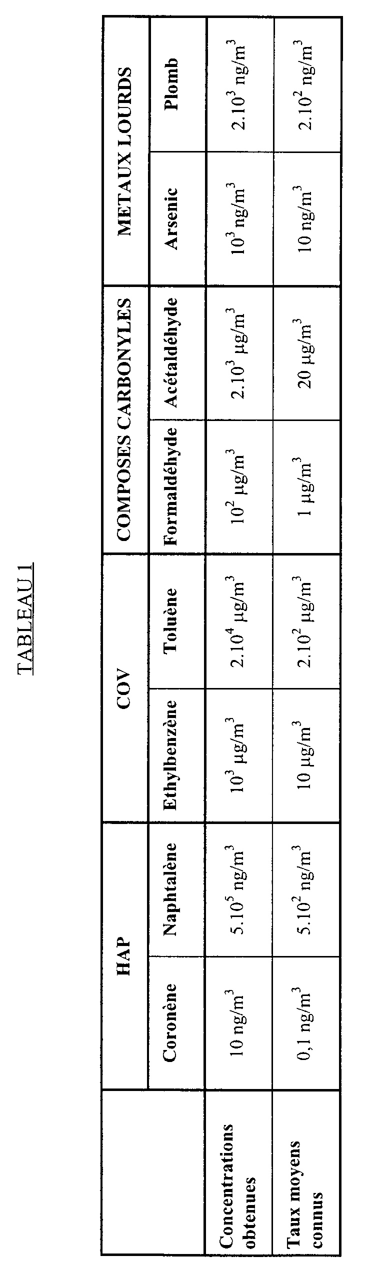

Les valeurs indiquées dans le Tableau 1 montrent que les concentrations obtenues par l'analyse des prélèvements effectués conformément à l'Invention sont dans tous les cas au moins 10 fois supérieures, le plus souvent 100 fois supérieures, voire dans le cas du naphtalène 1000 fois supérieures, aux taux moyens établis à partir de prélèvements réalisés par les méthodes conventionnelles de prélèvement.

Ainsi que cela ressort de ce qui précède, l'Invention ne se limite nullement à ceux de ses modes de mise en oeuvre, de réalisation, et d'application qui viennent d'être décrits de façon plus explicite ; ainsi, par exemple, l'enceinte (2), les chambres (4, 12) qu'elle comprend et les autres éléments de l'appareil à section droite circulaire peuvent être à section droite quelconque, carrée, rectangulaire ou autre. De manière similaire, le réservoir (3) peut être de forme quelconque.

On peut utiliser, en lieu et place du ventilateur aspirant (27) assurant la mise en dépression de l'intérieur de l'enceinte, tout autre dispositif capable de provoquer l'écoulement du milieu gazeux depuis la buse d'amenée (5) jusqu'à la buse de sortie (26) selon un flux continu et régulier telle qu'une pompe. De manière similaire, le système assurant la distribution du liquide dans la chambre d'interaction peut être constitué par une conduite dont l'extrémité est située à l'intérieur de cette chambre est munie d'une buse de dispersion de type pomme de douche, propre à assurer la dispersion du liquide sous la forme d'un voile.

## Revendications

1. Procédé pour prélever les éléments gazeux et/ou particulaires présents dans un milieu gazeux en vue de l'analyse qualitative et quantitative de ces éléments, ledit procédé utilisant une interaction entre ledit milieu gazeux et un volume prédéterminé d'un liquide et étant caractérisé en ce qu'il comprend :
a) l'introduction, dans une enceinte traversée de bas en haut par le milieu gazeux en un flux gazeux continu et comprenant un élément subdivisant ce flux gazeux en une pluralité de filets gazeux, d'une fraction du volume de liquide au-dessus de cet élément,
b) le maintien en suspension de cette fraction au-dessus dudit élément, grâce aux bulles formées par lesdits filets gazeux au contact du liquide, pendant un temps convenablement choisi, ladite fraction étant maintenue constante tout en étant renouvelée par un apport continu d'une quantité de liquide équivalente à celle qui s'écoule de la suspension par gravité,
c) le recueil du volume de liquide ayant interagi avec le milieu gazeux dans un réservoir muni de moyens de scellement pour sa fermeture hermétique, et
d) la mesure du volume de milieu gazeux ayant interagi avec le volume de liquide.

2. Procédé selon la revendication 1, caractérisé en ce que la subdivision du flux gazeux en filets gazeux est réalisée au moyen d'un élément traversé sur sensiblement toute sa surface par des ouvertures de taille fixe et régulièrement réparties.

3. Procédé selon la revendication 1 ou la revendication 2, caractérisé en ce que dans laquelle la subdivision du flux gazeux est réalisée au moyen d'un élément qui est traversé sur sensiblement toute sa surface par des ouvertures de diamètre compris entre environ 0,1 et 2 mm et qui sont au nombre d'environ 2 000 à 25 000 par m² de surface dudit élément.

4. Procédé selon l'une quelconque des revendications précédentes, caractérisé en ce que le liquide destiné à interagir avec le milieu gazeux comprend une ou plusieurs substances capables de favoriser la captation par ce liquide des éléments gazeux et particulaires à prélever.

5. Procédé selon l'une quelconque des revendications précédentes, caractérisé en ce que le liquide destiné à interagir avec le milieu gazeux comprend au moins un agent tensioactif.

6. Procédé selon l'une quelconque des revendications précédentes, caractérisé en ce que le flux gazeux est soumis, préalablement à sa subdivision en filets gazeux et à son interaction avec le liquide, à un écoulement tourbillonnaire de type cyclonique pour la séparation et le recueil des particules les plus denses contenues dans ce flux gazeux.

7. Procédé selon l'une quelconque des revendications 1 à 6, caractérisé en ce que l'apport continu d'une quantité de liquide équivalente à celle qui s'écoule de la suspension par gravité est réalisé par une distribution de ce liquide au-dessus de la fraction maintenue en suspension grâce à un système de distribution alimenté en liquide à partir d'un réservoir dans lequel s'effectue le recueil du liquide s'écoulant de la suspension par gravité.

8. Procédé selon la revendication 7, caractérisé en ce que la distribution du liquide au-dessus du volume de liquide maintenu en suspension est réalisée sous la forme d'un voile de liquide recouvrant sensiblement toute la surface libre de la fraction maintenue en suspension, et dont la fonction est d'assurer une captation des éléments gazeux et/ou particulaires qui pourraient ne pas avoir été captés par ladite fraction.

9. Procédé selon l'une quelconque des revendications précédentes, caractérisé en ce que le volume de liquide destiné à interagir avec le milieu gazeux est contenu dans un réservoir hermétiquement clos et muni de moyens d'ouverture pour permettre l'introduction de ce liquide dans l'enceinte.

10. Procédé selon la revendication 9, caractérisé en ce que le réservoir qui contient le volume de liquide destiné à interagir avec le milieu gazeux est le même réservoir que celui dans lequel ce volume de liquide est recueilli après avoir interagi avec ledit milieu gazeux.

11. Appareil (1) pour prélever les éléments gazeux et/ou particulaires présents dans un milieu gazeux en vue de l'analyse qualitative et quantitative de ces éléments par une interaction entre ledit milieu gazeux et un volume prédéterminé d'un liquide caractérisé en ce qu'il comprend :
- une enceinte (2),
- des moyens (5) pour introduire le milieu gazeux dans l'enceinte et des moyens (26) pour évacuer ce milieu hors de l'enceinte,
- des moyens (27) pour mettre en dépression l'intérieur de l'enceinte (2) de manière à permettre au milieu gazeux de traverser cette enceinte de bas en haut en un flux gazeux continu,
- un élément (13) pour subdiviser ce flux gazeux en une pluralité de filets gazeux au cours de sa traversée de l'enceinte (2),
- des moyens pour introduire dans l'enceinte (2), au-dessus de l'élément (13) subdivisant le flux gazeux en filets gazeux, une fraction du volume de liquide destiné à interagir avec le milieu gazeux,
- des moyens pour renouveler en continu cette fraction,
- un réservoir (3) pour recueillir le volume de liquide après qu'il ait interagi avec le milieu gazeux, le dit réservoir étant muni de moyens de scellement pour sa fermeture hermétique, et
- des moyens pour mesurer le volume de milieu gazeux ayant interagi avec le volume de liquide.

12. Appareil selon la revendication 11, caractérisé en ce que l'enceinte (2) comprend une chambre d'interaction (12) dans laquelle s'effectue l'interaction entre le milieu gazeux et le volume de liquide et qui comprend, à sa partie inférieure, l'élément (13) subdivisant le milieu gazeux en filets gazeux, lequel s'étend sur sensiblement toute la section transversale de cette chambre.

13. Appareil selon la revendication 11 ou la revendication 12, caractérisé en ce que l'élément (13) pour subdiviser le flux gazeux en filets gazeux est un élément traversé sur sensiblement toute sa surface par des ouvertures de taille fixe et régulièrement réparties.

14. Appareil selon l'une quelconque des revendications 11 à 13, caractérisé en ce que l'élément (13) pour subdiviser le flux gazeux en filets gazeux est un élément traversé sur sensiblement toute sa surface par des ouvertures de diamètre compris entre 0,1 et 2 mm et qui sont au nombre d'environ 2 000 à 25 000 par m² de surface de cet élément.

15. Appareil selon l'une quelconque des revendications 11 à 14, caractérisé en ce que l'enceinte (2) comprend, au-dessous de la chambre d'interaction (12), une chambre (4) de type "cyclone" assurant un écoulement tourbillonnaire du milieu gazeux avant son entrée dans ladite chambre d'interaction (12).

16. Appareil selon l'une quelconque des revendications 11 à 15, caractérisé en que les moyens pour introduire la fraction du volume de liquide destiné à interagir avec le milieu gazeux et les moyens pour renouveler cette fraction en continu comprennent un système assurant la distribution de ce liquide à la partie supérieure de la chambre d'interaction (12), sous la forme d'un voile s'étendant sur sensiblement toute la section transversale de cette chambre, et des moyens (16, 17, 18) pour alimenter ce système à partir d'un réservoir (3) contenant initialement ledit volume de liquide et dans lequel s'effectue le recueil du liquide s'écoulant de la suspension par gravité.

17. Appareil selon la revendication 16, caractérisé en ce que le système assurant la distribution du liquide à la partie supérieure de la chambre d'interaction (12) comprend une conduite (15) qui pénètre dans cette chambre et dont une extrémité se confond avec l'axe vertical (a) de ladite chambre et est surmontée à faible distance d'un élément déflecteur (19) et dont l'autre extrémité est reliée au moyen assurant son alimentation en liquide.

18. Appareil selon la revendication 16 ou la revendication 17, caractérisé en ce que le réservoir (3) contenant initialement le volume de liquide destiné à interagir avec le milieu gazeux est le même réservoir que celui dans lequel ce volume de liquide est recueilli après avoir interagi avec le milieu gazeux.

19. Appareil selon la revendication 18, caractérisé en ce que le réservoir (3) contenant le volume de liquide destiné à interagir avec le milieu gazeux et servant de moyens de recueil de ce volume de liquide est un élément indépendant de l'enceinte (2) et apte à être connecté de manière réversible à cette enceinte et aux moyens d'alimentation (16) du système assurant la distribution du liquide dans la chambre d'interaction.

20. Appareil selon la revendication 19, caractérisé en ce que le réservoir (3) est une cartouche hermétiquement close, préremplie du volume de liquide destiné à interagir avec le milieu gazeux et comprenant des moyens de connexion avec l'enceinte (2) d'une part, et avec lesdits moyens d'alimentation (16) d'autre part, qui sont munis de moyens pour leur ouverture et leur fermeture.

21. Appareil selon l'une quelconque des revendications 11 à 20, caractérisé en ce qu'il comprend, de plus, des moyens (40) de raccordement à un réseau électrique et des moyens (41) d'alimentation en énergie électrique pour son fonctionnement en autonomie.

22. Appareil selon l'une quelconque des revendications 11 à 21, caractérisé en ce qu'il se présente sous la forme d'une structure compacte, portable ou tractable par une personne, de type sac à dos, valise ou mallette.
